# EUROPEAN PATENT SPECIFICATION

(11) **EP 3 649 739 B1**
(45) Date of publication and mention of the grant of the patent: **18.11.2026**
(21) Application number: 18825364.5
(22) Date of filing: 31.03.2018
(51) Int. Cl.: H04B 1/04, H04L 25/02, H04B 1/18

(54) **ANTENNA DYNAMICALLY MATCHED WITH ELECTROMECHANICAL RESONATORS**
MIT ELEKTROMECHANISCHEN RESONATOREN DYNAMISCH ABGESTIMMTE ANTENNE
ANTENNE APPARIÉE DYNAMIQUEMENT À DES RÉSONATEURS ÉLECTROMÉCANIQUES

(30) Priority: 29.06.2017 US 201715638052
(43) Date of publication of application: 13.05.2020
(73) Proprietor: HRL Laboratories, LLC, Malibu, CA 90265-4799 (US)
(72) Inventor: WALL, Walter S., Santa Monica California 90403 (US); KUBENA, Randall L., Oak Park California 91377 (US); MOYER, Harris P., Los Angeles California 90045 (US)
(74) Representative: Lusinchi, Laurent Pierre
(86) International application number: PCT/US2018/025595
(87) International publication number: WO 2019/005251

(56) References cited:
- WO-A1-2015/095573
- WO-A1-2016/081894
- US-A- 5 801 661
- US-A1- 2013 130 631
- US-B2- 7 573 350
- US-B2- 7 573 350

## Description

### Cross Reference to Related Applications

This application a continuation-in-part of US Patent Application Serial No. 15/638, 052 filed on June 29, 2017 and entitled "Antenna Loaded with Electromechanical Resonators". This application also claims the benefit of US Provisional Patent Application Serial No. 62/356,734 filed on June 30, 2016 and entitled "Antenna Loaded with Electromechanical Resonators".

### Technical Field

This invention relates to using electromechanical resonators with antennas. The resonators are switched into a series connection with all or a portion of the antennas dynamically.

### Background

Many locations, such as dense urban areas, forests, and underwater environments present significant challenges for the reception and transmission of wireless signals. Radio frequency system operating below 30MHz are more efficient at penetrating these difficult environments but the systems required to generate and receive these waves are often large, heavy, and inefficient, making them impractical for many small and/or mobile platforms. In the above-identified US Patent Application, it is taught that the efficiency of electrically small dipole and monopole antennas can be dramatically improved using matching networks comprised of high Q electromechanical resonators. These resonators improve the efficiency of traditional small antenna matching techniques by generating inductive reactance values with significantly less loss or higher Q than traditional coil inductors. However, increasing the Q associated with antenna matching networks also reduces the antenna bandwidth and thus limits the amount of information which can be transmitted from the antenna.

US 7,573,350 discloses an input-matching network including an acoustic resonator providing a virtual impedance to match impedance between a first component and second component. As an example, the first component may be an antenna and the second component may be an amplifier. The acoustic resonator provides a virtual impedance to match impedance between the antenna and the amplifier. The acoustic resonator may be, for example, a film bulk acoustic (fbar) resonator or a surface acoustic wave (saw) resonator.

So there is a need to further improve upon the technology of above-identified US Patent Application to increase the bandwidth of antenna (and particularly electrically small antennas), especially those using matching networks comprised of high Q electromechanical resonators. As is discussed below, while the present invention maybe conveniently utilized with electrically small antennas, it is not limited to electrically small antennas, but rather may be used with larger antenna, more full sized (or completely full sized) antennas, if desired.

### Brief description

The disclosed technology is intended to improved upon the bandwidth limitations associated with prior art antennas, and particularly Electrically Small Antennas (ESAs). In the technology described in the above-identified US Patent Application, by dynamically switching the electromechanical resonators used to match electrically small monopole and dipole antennas enables high data rate On-Off Keying (OOK) and Frequency Shift Keying (FSK) transmission schemes. As is discussed below, the presently disclosed technology may be used with larger antennas than ESA antennas, if desired. The invention is defined by the features of the appended claims.

### Brief Description of the Drawings

Fig. 1 illustrates one embodiment of the present invention, which uses a single electromechanical resonator to dynamically match a dipole or monopole antenna to generate broadband OOK signals; the electrical properties of the electromechanical resonator can be modeled as a series inductor, capacitor, and resistor, in parallel with a capacitor as is depicted by the equivalent circuit diagram of Fig. 1-1.
Figs. 2a and 2b are plots of simulated radiated power from a 12" dipole antenna configured using the dynamic matching network shown in Fig. 1 as is described below. Fig. 2b shows a portion of the plot of Fig. 2a, and is representative of what the entire plot of Fig. 2a would look like (except that the power would be lower at the beginning of Fig. 2a) if Fig. 2a could be presented as a much larger figure.
Fig. 3 illustrates another embodiment of the present invention, which uses a bank of electromechanical resonator to dynamically match a dipole or monopole antenna to generate broadband FSK signals or broadband spread spectrum signals.
Fig. 4 illustrates a third embodiment of the present invention, in which a bank of electromechanical resonators is used to dynamically center load a monopole antenna.
Fig. 5 illustrates a fourth embodiment of the present invention, in which a bank of electromechanical resonators are used to dynamically center load both arms of a dipole antenna.
Fig. 6 illustrates an embodiment where the electronic switch is placed downstream of the bank of resonators from the RF source or transmitter.

### Detailed Description

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification.

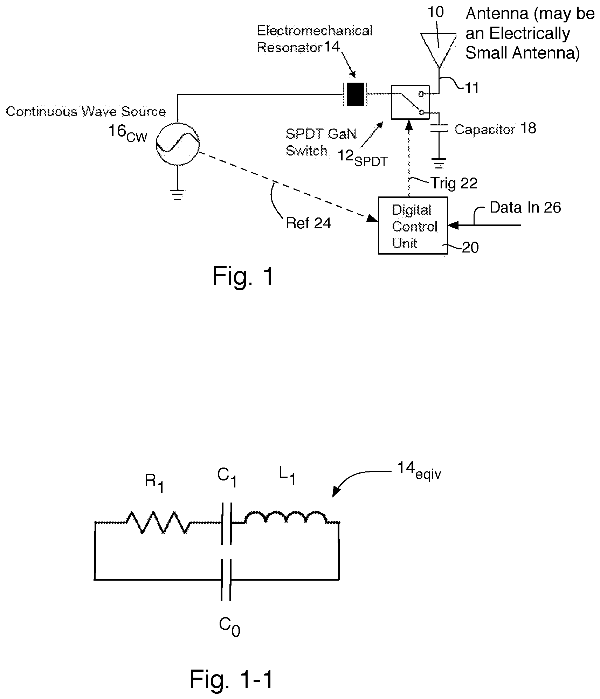

One embodiment of the present invention is now described with reference to Fig. 1. In Fig. 1 a dipole or monopole antenna 10 is connected via a conductor 11 to one output of a single pull double throw (SPDT) switch 12_{SPDT} whose input is connected to an electromechanical resonator 14 which, in turn, is connected to a continuous wave (CW) source or transmitter 16_{CW}. The other output of the switch 12 is connected to a capacitor 18 preferably having the same reactance as the antenna 10. The conductor 11 may be a coaxial cable with a grounded shield or a pair of parallel conductors commonly found in transmission circuits. In some embodiments a balun (not shown) may be utilized between the antenna 10 and conductor 11. Control signals (see numeral 22) for the switch 12 are supplied by a control unit 20, which is synchronized via other control signals (see numeral 24) with the phase of the source or transmitter 16 to ensure that switching of switch 12 only occurs at a current minimum of the source or transmitter 16. By operating the switch 12 to toggle between the antenna 10 and capacitor 18, high data-rate on-off keying (OOK) waveforms can be radiated by antenna 10. The digital control unit 20 is described in greater detail below.

The electromechanical resonator 14 is preferably constructed as a MEMS resonator which can be formed from a variety of different materials, such as, but not limited, to Quartz, Si, and LiNbO₃, and can be designed by persons skilled in the technology of such devices to operate in a variety of different modes depending on the desired frequency of operation. At UHF-VHF frequencies, a quartz resonator can be constructed to operate in a shear mode, whereas at HF and MF frequencies it can be constructed to operate in an extensional mode, and at VLF and LF frequencies it can be constructed to operate as a tuning fork resonator. The electrical properties of the resonator 14 can be modeled as a series inductor, capacitor, and resistor, in parallel with a capacitor as is depicted in the equivalent circuit 14 of Fig. 1-1. This equivalent circuit 14, also known as the Butterworth-Van Dyke (BVD) model, has both a series and parallel resonance. The highest resonator inductance values lie between the series and parallel resonances of the resonator and therefore it is within this range that the best matching occurs.

The SPDT switch 12 may be implemented by a semiconductor transistor, such as a GaN transistor, although other transistor types and/or chemistries may alternatively be used if desired. Also, the switch 12 may comprise more than one transistor.

To demonstrate the effect of the present dynamic electromechanical antenna matching technique, a simulation of a 32 MHz sheer mode resonator was performed in COMSOL. In this simulation a 4W source operating at 31.9 MHz was used to excite a dipole antenna 10. The switch 12 shown in Fig. 1 was operated with a 0.01 ns rise and fall time, a 0.333 µs period, and 50% duty cycle.

The parameters of a Butterworth-Van Dyke (BVD) model of an equivalent circuit 14_{equiv} (shown in Fig. 1-1) of the electromechanical resonator 14 of Fig. 1 for this simulation are given in Table I below:

| Table I | |
|---|---|
| Parameter | Value |
| C₀ | 0.8 pF |
| C₁ | 5 fF |
| L₁ | 5 mH |
| R₁ | 3 Ω |

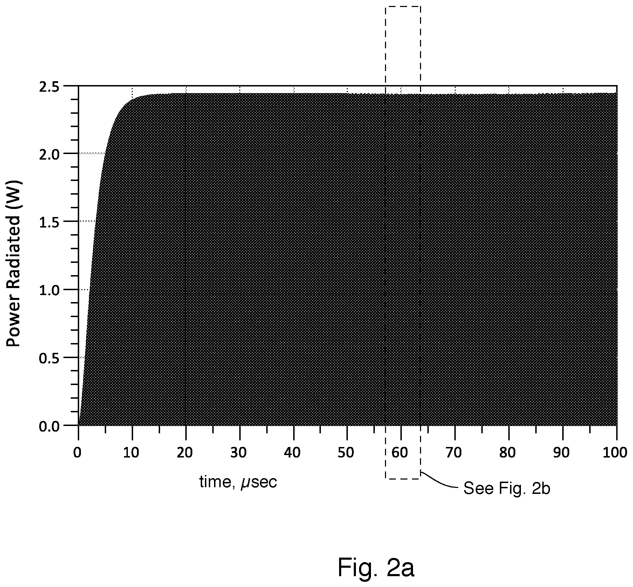

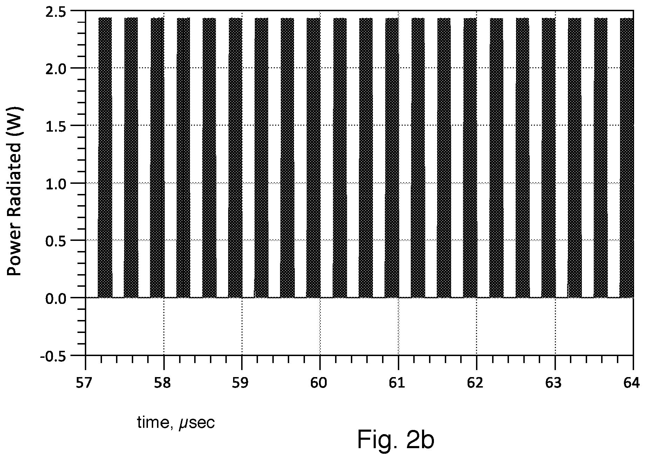

Around 31.9 MHz this resonator 14 exhibits an inductance of 31.5 µH along with a large quality factor (Q) of 520. This quality factor is approximately ten times greater than a Commercial Off The Shelf (COTS) chip inductor, thus increasing the radiation efficiency of an electrically small antenna by about 10 dB, but bandwidth of that same antenna would also be decreased by a factor of 10. However by periodically switching the output of the electromechanical resonator between the antenna 10 and a load capacitor 18, waveforms with significantly broader bandwidths can be radiated. To demonstrate this, transient simulations of a 12" dipole antenna (having a driven element with 6 inch arms) matched with the equivalent inductance extracted from the aforementioned 31.9 MHz shear mode resonator 14, were performed using a commercial circuit simulation software. A full size 1/4 wave dipole antenna resonant at 32 MHz would have elements approximately 7 feet long (14 ft for the dipole end to end) and if that is compared to the 6 inch elements utilized in this simulation, the dipole antenna 10 is certainly an Electrically Short Antenna (ESA). The nominal bandwidth of this electrically short dipole antenna 10 matched without a matching resonator 14 would be approximately 93 KHz. However, by utilizing an embodiment of dynamic antenna matching configuration shown in Fig. 1, the output radiation of the same antenna can be modulated at a rate of 3 MHz (see Figs. 2a and 2b). Figs. 2a and 2b are plots of simulated radiated power from a 12" dipole antenna configured using the dynamic matching network shown in Fig. 1 as is described above. Fig. 2b shows a portion of the plot of Fig. 2a, and is representative of what the entire plot of Fig. 2a would look like (except that the power would be lower at the beginning of Fig. 2a) if Fig. 2a could be presented as a much larger figure.

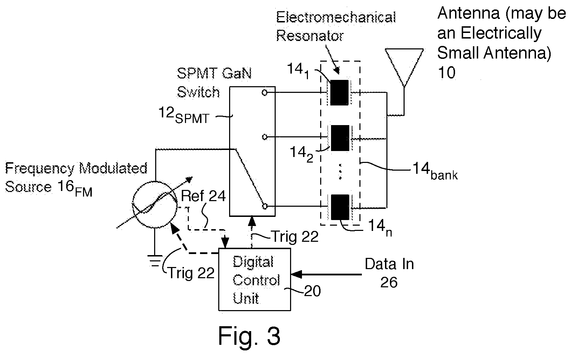

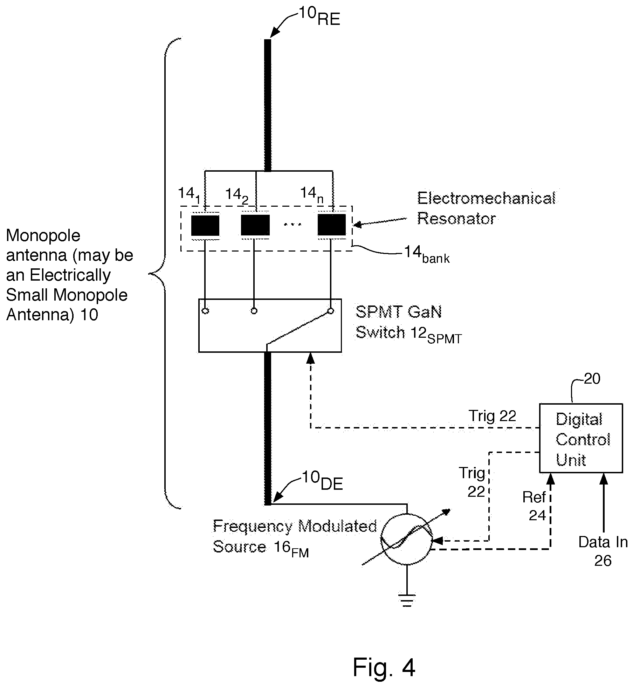

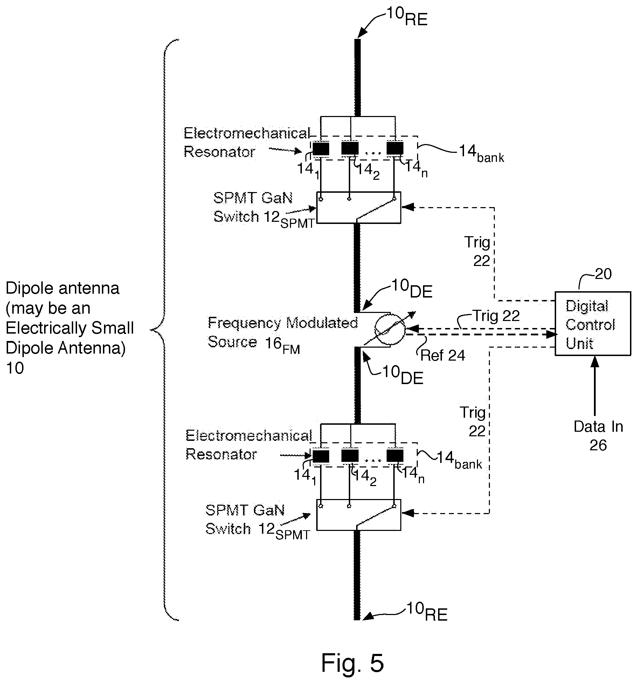

Another embodiment of the present invention is now described with reference to Fig. 3. In this embodiment, the dipole or monopole antenna 10 (which may be -- but need not be -- an ESA) is connected in series to a bank 14_{bank} of electromechanical resonators 14₁ ... 14ₙ and a single pull multiple throw (SPMT) switch 12_{SPMT} as well as a frequency modulated (FM) source or transmitter 16_{FM}. The FM source or transmitter 16_{FM} preferably outputs a CW (or carrier) signal (at any given instance of time) whose frequency is modulated in a step-wise fashion in sync with the switching the electromechanical resonators 14₁ ... 14ₙ in or out of connection between the FM source or transmitter 16_{FM} and the antenna 10, which switching is controlled by trigger or synchronizing signals (Trig) on signal line 22 to select one of the resonators 14₁ ... 14ₙ to connect the source or transmitter 16_{FM} to the antenna 10. Each resonator 14₁ ... 14ₙ in the bank 14_{bank} serves to match the antenna 10 to a different CW frequency output by FM source or transmitter 16_{FM}. When matched to the antenna 10, the selected resonator (among the group of resonators in the bank 14_{bank}) which is switched into series connection between the source or transmitter 16_{FM} and the antenna has, at the frequency being transmitted, a high Q, and preferably a Q greater than 500 at the frequency being transmitted. The trigger or synchronizing signals on signal line 22 for switch 12_{SPMT} are supplied by a slightly more complex version of external control unit 20 of Fig. 1, which is synchronized *a priori* via a reference signal (Ref) on line 24 which provides the phase and frequency of the frequency modulated source or transmitter 16_{FM} to help ensure that trigger or synchronizing signals (Trig) on signal line 22 occur at transmit RF current minimums. Using the embodiment of control unit 20 of Fig. 3, resonators 14₁ ... 14ₙ in this matching network are synchronously switched to match the output frequency of the source or transmitter 16_{FM} to antenna 10 at points in time when the current through the selected resonator in the bank of electromechanical resonator 14₁ ... 14ₙ is at a minimum. This time varying antenna matching scheme enables high data-rate FSK waveforms to be radiated. In the embodiment of Fig. 3, the the bank of resonators 14₁ ... 14ₙ and a bank of GaN switches implementing 12_{SPMT} are preferably located at or near the base of the monopole or dipole antenna 10, although they can also be placed anywhere along the length of the arms of the dipole antenna (see Figs. 4 and 5) with the understanding that this will change the resonant frequency and radiation resistance of the antenna 10.

Some FSK signals involve only two transmitted frequencies (two tones). In the case of a 2-tone FSK signal having two different transmit frequencies, then n=2 and only two different electromechanical resonator 14₁ and 14₂ are needed. If the FSK signal involves additional tones (as in the case of spread spectrum signals), then the number of different frequencies transmitted by FM source or transmitter 16_{FM} (n frequencies, with each frequency occurring in a different time slot) and the number (n) of the electromechanical resonators 14₁ ... 14ₙ will be greater than 2 (and perhaps substantially greater than 2).

Moreover, if the FM source or transmitter 16_{FM} is intended to operate in different frequencies bands and/or on multiple pairs of tones (and/or on multiple groups of n-tones for spread spectrum operation), then the total number n of resonators 14₁ ... 14ₙ in the bank 14_{bank} of resonators may be very large (in the hundreds or even thousands).

Since the resonators 14₁ ... 14ₙ are preferably embodied as MEMS devices, a large number can be placed in a transmitter, even if the transmitter is embodied a handheld device. Additionally, the antenna 10 may be physically fixed to or with such a handheld device or it may be removable, as may be desired.

If the tones are sufficiently closely spaced from one another, then in some embodiments, a single resonator in the resonator bank may be utilized for more than one tone, so in that case the number of resonators may be less that the number of transmitted tones.

Fig. 4 illustrates an embodiment of the present invention, which is similar to the embodiment of Fig. 3, but in which the bank 14_{bank} of electromechanical resonators is used to dynamically center load a monopole antenna 10 (which may optionally be electrically small). Fig. 5 illustrates another embodiment of the present invention, which is similar to the embodiments of Figs. 3 and 4, but in which a bank 14_{bank} of electromechanical resonators is used to dynamically center load each arm of an dipole antenna 10 (which also may optionally be electrically small). The embodiments of Figs. 4 and 5 are otherwise operationally identical to the embodiment of Fig. 3 (it being understood that the Qs of the individual electromechanical resonators are adjusted as needed to match the particular antennas 10 being utilized). While the bank 14_{bank} of electromechanical resonators in the embodiments of Figs. 4 and 5 are preferably center loaded along the length of the transmitting elements of the antennas 10, the bank 14_{bank} of electromechanical resonators in some embodiments may be located other than at the centers of the transmitting elements of the antennas 10 and thus may, in such other embodiments, be located closer to (or at) either the driven end(s) 10_{DE} of antenna 10 or the remote end(s) 10_{RE} of antenna 10. Two signal lines 22 are depicted for these embodiments -- both signal lines 22 convey the same information, but the Trig control signals on signal line 22 paralleling a portion of the antenna element(s) may be embodied as optical signals in these embodiments to avoid any undesirable electromagnetic coupling with the antenna 10 whereas the the Trig control signals on signal line 22 to source 16_{FM} may be embodied as electrical signals. Power to operate transistorized switch 16 may be sent to it optically as well. Moreover, in further embodiments, multiple banks 14_{bank} of electromechanical resonators (each with an associated switch 12) may be used between the driven end(s) 10_{DE} of antenna 10 or the remote end(s) 10_{RE} of antenna 10, if desired. And additionally a bank 14_{bank} of electromechanical resonators (with an associated switch 12) may be used between the driven end(s) 10_{DE} of antenna 10 and the FM source or transmitter 16_{FM} in such further embodiments.

The control unit 20 depicted in in Figs, 1, 3, 4, and 5 takes an input a digital data stream 26 containing the information to be modulated on the RF signal to be transmitted. The origin the data in data stream 26 may be from a microprocessor or micro-controller or perhaps data memory. The data in stream 26 may be converted into an amplitude modulated voltage Trig signal on signal line 22 which, in the event, is preferably comprised of discrete voltage levels. In the case of the embodiment of Fig. 1, the Trig signal on signal line 22 switches between two voltage levels and serves as the input signal to the SPDT switch 12_{SPDT} for controlling that switch. The timing of the transition between these discrete voltage levels is synchronized with the reference signal (Ref) on line 24 from the RF source 16_{CW} to ensure that switching of the Trig signal on signal line 22 occurs when the RF current provided by source or transmitter 16 is at a minimum.

In the case of the frequency modulation embodiments shown in Figs. 3, 4, and 5, the Trig signal on signal line 22 preferably comprises multiple voltage levels (or multiple optical intensity (or color) levels if optical signaling technologies are utilized) and serves as the input signal to the SPMT switches 12_{SPMT} shown in these figures. The timing of the transitions between these voltage or optical levels (or colors) is synchronized with the reference (Ref) signal on line 24 from the RF source to help ensure that switching occurs when the RF current provided by source or transmitter 16_{FM} is at (or near) a minimum to extend the live of the transistor switches therein. So the Trig signal on its signal line 22 to the source or transmitter tells the source or transmitter what RF frequency to transmit on while the signal Ref on line 24 from the source or transmitter 16_{FM} enables the switching to a different frequency (as instructed by the Trig signal on signal line 22) to occur at or near a RF current minimum. The switching to a different frequency occurs in sync with the switching in of a different resonator in bank 16_{bank}.

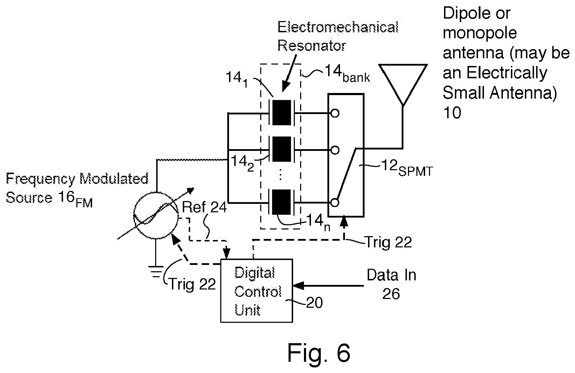

Fig. 6 depicts an embodiment where the electronic switch 12 is placed downstream of the bank 16_{bank} of resonators instead of upstream (as in the case of the embodiment of Fig. 3). The resonators are preferably connected individually in series with the source 16 and the antenna 10, so the relative location of the switch 12 and the bank of resonators 14_{bank}. The embodiments of Figs 4 and 5 may be similarly modified if desired.

It is certainly possible to envision more complicated switch 12 than the SPMT switch depicted in the embodiments of Figs. 3-6. For example, multiple resonators could be connected in circuit between the source 16 and the antenna 10 at any instant of time, if desired, at the risk of complicating the design of switch 12. The depicted embodiments, where only one resonator 14 is coupled between the source 16 and the antenna 10 at any instant of time is preferred due to the relative simplicity of the design of switch 12, but the invention itself is not necessarily so limited, unless otherwise specifically required by the claims.

Having now described the invention in accordance with the requirements of the patent statutes, those skilled in this art will understand how to make changes and modifications to the present invention to meet their specific requirements or conditions. Such changes and modifications may be made without departing from the scope of the invention as disclosed herein.

Reference to a claim element in the singular is not intended to mean "one and only one" unless explicitly so stated. Moreover, no element, component, nor method or process step in this disclosure is intended to be dedicated to the public regardless of whether the element, component, or step is explicitly recited in the Claims. No claim element herein is to be construed under the provisions of 35 U.S.C. Section 112, as it exists on the date of filing hereof, unless the element is expressly recited using the phrase "means for ..." and no method or process step herein is to be construed under those provisions unless the step, or steps, are expressly recited using the phrase "comprising the step(s) of ..."

Modifications, additions, or omissions may be made to the systems, apparatuses, and methods described herein without departing from the scope of the invention. The components of the systems and apparatuses may be integrated or separated. Moreover, the operations of the systems and apparatuses may be performed by more, fewer, or other components. The methods may include more, fewer, or other steps. Additionally, steps may be performed in any suitable order. As used in this document, "each" refers to each member of a set or each member of a subset of a set.

All elements, parts and steps described herein are preferably included. It is to be understood that any of these elements, parts and steps may be replaced by other elements, parts and steps or deleted altogether as will be obvious to those skilled in the art.

## Claims

1. A RF transmitting device comprising:
a RF source (16) or transmitter arranged for generating tone signals one at a time; and
an antenna (10), the antenna (10) having at least one transmitting element coupled to the RF source (16) or transmitter;
an electronic switch (12); and
a plurality of electromechanical resonators (14₁, ... 14ₙ) each connected to said electronic switch (12), the electronic switch (12) and the plurality electromechanical resonators (14₁, ... 14ₙ) being electrically connected:
(i) between at least first (10_{DE}) and second (10_{RE}) portions of the at least one transmitting element; or
(ii) between the RF source (16) or transmitter and the antenna (10);
each electromechanical resonators (14₁, ... 14ₙ) being arranged to match the antenna to the RF source (16) or transmitter at a different tone frequency; and
a digital control unit (20) configured to control the RF source (16) or transmitter to implement frequency shift keying or spread spectrum keying of an input data stream (26);
the digital control unit (20) being further configured to control the electronic switch (12) for selecting a particular one or particular ones of said plurality electromechanical resonators (14₁, ... 14ₙ) consistently with the tone signals generated by the RF source (16) or transmitter.

2. The RF transmitting device of claim 1 wherein the electronic switch (12) is a transistorized SPMT switch.

3. The RF transmitting device of claim 1 wherein the antenna (10) is an electrically short dipole antenna or an electrically short monopole antenna.

4. The RF transmitting device of claim 1, wherein
the RF source (16) or transmitter is configured to transmit a selected one of n different tones for a given period of time as controlled by a trigger signal (22) generated by said digital control unit (20) and wherein said digital control unit (20) is also configured to cause the electronic switch (12) to change state to thereby allow the switch-selected one or switch-selected ones of said plurality of electromechanical resonators (14₁, ... 14ₙ) to couple a switch-selected one of n different tones to said antenna (10) with a relatively higher Q during said given period of time than if a non-selected one of said electromechanical resonators (14₁, ... 14ₙ) were connected instead between said the RF source (16) or transmitter and the antenna (10) during said given period of time.

5. The RF transmitting device of claim 1, wherein
the RF source (16) or transmitter is configured to transmit a selected one of n different tones for a given period of time as controlled by a trigger signal (22) generated by said digital control unit (20) and wherein said digital control unit (20) is also configured to cause the electronic switch (12) to change state to thereby allow the switch-selected one or switch-selected ones of said plurality of electromechanical resonators (14₁, ... 14ₙ) to match the antenna (10) to the RF transmitter device at the frequency of the switch-selected one of n different tones during said given period of time.

6. A method of transmitting a RF signal from an antenna (10), the method comprising:
providing a RF source (16) or transmitter arranged for generating tone signals one at a time [0008]; and
providing an antenna (10), the antenna (10) having at least one transmitting element coupled to the RF source (16) or transmitter;
providing an electronic switch (12); and
providing a plurality of electromechanical resonators (14₁, ... 14ₙ) each connected to said electronic switch (12), the electronic switch (12) and the plurality electromechanical resonators (14₁, ... 14ₙ) being electrically connected:
(i) between at least first (10_{DE}) and second (10_{RE}) portions of the at least one transmitting element; or
(ii) between the RF source (16) or transmitter and the antenna (10);
each electromechanical resonators (14₁, ... 14ₙ) being arranged to match the antenna to the RF source (16) or transmitter at a different tone frequency [0008]; and
providing a digital control unit (20) configured to control the RF source (16) or transmitter to implement frequency shift keying or spread spectrum keying [0008] of an input data stream (26) [0033];
the digital control unit (20) being further configured to control the electronic switch (12) for selecting a particular one or particular ones of said plurality electromechanical resonators (14₁, ... 14ₙ) consistently with the tone signals generated by the RF source (16) or transmitter [0008].

7. The method of claim 6, comprising:
generating signals one at a time by the RF source (16) or transmitter capable of generating a plurality of different signals;
with the electronic switch (12) coupling an output of the RF source (16) or transmitter to the antenna (10) via a selected one or ones of the plurality of electromechanical resonators (14₁, ... 14ₙ), the selected one or ones of the plurality of electromechanical resonators (14₁, ... 14ₙ) being selected according to a trigger signal (22) which also selects a corresponding signal generated by the RF source (16) or transmitter;
wherein the step of generating one at a time by a RF source (16) or transmitter comprises generating single tones one at a time and wherein the plurality of electromechanical resonators (14₁, ... 14ₙ) is a plurality of MEMs resonators; wherein the trigger signal (22) is generated by the digital control unit (20).

8. The method of claim 7,
wherein each one of the plurality of resonators (14₁, ... 14ₙ) has series and parallel resonant frequencies and has an associated Q greater than 500 when passing a signal having a frequency between said series and parallel resonant frequencies.

9. The method of claim 8, wherein the antenna (10) has at least first (10_{DE}) and second (10_{RE}) portions which are connected to each other via said selected one or ones of a plurality of resonators (14₁, ... 14ₙ).

10. The method of claim 7 wherein the trigger signal (22) is generated by the digital control unit (20) for changing the selected one of a plurality of MEMs resonators (14₁, ... 14ₙ) coupling the output of the RF source (16) or transmitter to the antenna (10) during a time when the RF signal generated by the RF source or transmitter is at a minimum.

11. The method of claim 8 wherein the selected one or ones of a plurality of MEMs resonators (14₁, ... 14ₙ) couples the antenna (10) to the RF source (16) or transmitter with a relatively higher Q during a given period of time than if a non-selected one or ones of said electromechanical resonators (14₁, ... 14ₙ) were connected instead between said the RF source (16) or transmitter to said antenna during said given period of time.

12. The method of claim 8 wherein the antenna (10) is an electrically small antenna.

## Patentansprüche

1. Ein HF-Sendegerät, umfassend:
eine HF-Quelle (16) oder einen Sender, die dazu eingerichtet sind, nacheinander jeweils ein Tonsignal zu erzeugen;
und
eine Antenne (10), wobei die Antenne (10) mindestens ein Sendeelement aufweist, das mit der HF-Quelle (16) oder dem Sender gekoppelt ist;
einen elektronischen Schalter (12); und
eine Vielzahl von elektromechanischen Resonatoren (14₁, ... 14ₙ), die jeweils mit dem elektronischen Schalter (12) verbunden sind, wobei der elektronische Schalter (12) und die Vielzahl von elektromechanischen Resonatoren (14₁, ... 14ₙ) elektrisch verbunden sind:
(i) zwischen mindestens dem ersten (10DE) und dem zweiten (10RE) Abschnitt des mindestens einen Sendeelements; oder
(ii) zwischen der HF-Quelle (16) oder dem Sender und der Antenne (10);
wobei jeder elektromechanische Resonator (14₁, ... 14ₙ) so angeordnet ist, dass er mit der Antenne der HF-Quelle (16) oder dem Sender in einer anderen Tonfrequenz übereinstimmt; und
wobei eine digitale Steuereinheit (20) so konfiguriert ist, dass sie die HF-Quelle (16) oder den Sender steuert, um eine Frequenzumtastung oder eine Spreizspektrum-Modulation eines Eingangsdatenstroms (26) zu implementieren;
wobei die digitale Steuereinheit (20) ferner so konfiguriert ist, dass sie den elektronischen Schalter (12) steuert, um einen bestimmten oder bestimmte der Vielzahl von elektromechanischen Resonatoren (14₁, ... 14ₙ) auszuwählen, die mit den Tonsignalen, die von der HF-Quelle (16) oder dem Sender erzeugt werden, übereinstimmen.

2. HF-Sendegerät nach Anspruch 1, wobei der elektronische Schalter (12) ein transistorisierter SPMT-Schalter ist.

3. HF-Sendegerät nach Anspruch 1, wobei die Antenne (10) eine elektrisch kurze Dipolantenne oder eine elektrisch kurze Monopolantenne ist.

4. HF-Sendegerät nach Anspruch 1, wobei
die HF-Quelle (16) oder der Sender so konfiguriert sind, dass sie einen ausgewählten von n verschiedenen Signaltönen für einen bestimmten Zeitraum übertragen, gesteuert von einem Triggersignal (22), das von der digitalen Steuereinheit (20) erzeugt wird, und wobei die digitale Steuereinheit (20) ebenfalls so konfiguriert ist, dass sie den elektronischen Schalter (12) dazu veranlasst, seinen Schaltzustand zu ändern, um dadurch zu ermöglichen, dass der schalterseitig ausgewählte oder die schalterseitig ausgewählten der Vielzahl von elektromechanischen Resonatoren (14₁, ... 14ₙ) einen schalterseitig ausgewählten von n verschiedenen Signaltönen mit der Antenne (10) mit einem relativ höheren Q-Faktor während des gegebenen Zeitraums verbinden als wenn ein nicht ausgewählter der elektromechanischen Resonatoren (14₁, ... 14ₙ) stattdessen zwischen der HF-Quelle (16) oder dem Sender und der Antenne (10) während des gegebenen Zeitraums geschaltet wäre.

5. HF-Sendegerät nach Anspruch 1, wobei
die HF-Quelle (16) oder der Sender so konfiguriert sind, dass sie einen ausgewählten von n verschiedenen Signaltönen für einen bestimmten Zeitraum übertragen, gesteuert von einem Triggersignal (22), das von der digitalen Steuereinheit (20) erzeugt wird, und wobei die digitale Steuereinheit (20) ebenfalls so konfiguriert ist, dass sie den elektronischen Schalter (12) dazu veranlasst, seinen Schaltzustand zu ändern, um dadurch zu ermöglichen, dass der schalterseitig ausgewählte oder die schalterseitig ausgewählten der Vielzahl von elektromechanischen Resonatoren (14₁, ... 14ₙ) die Antenne (10) an das HF-Sendegerät mit der Frequenz des schalterseitig ausgewählten von n verschiedenen Signaltönen während des gegebenen Zeitraums anpassen.

6. Verfahren zum Übertragen eines HF-Signals von einer Antenne (10), das Verfahren umfassend:
Bereitstellen einer RF-Quelle (16) oder eines Senders, die so angeordnet sind, dass sie nacheinander Tonsignale erzeugen [0008]; und
Bereitstellen einer Antenne (10), wobei die Antenne (10) mindestens ein Sendeelement aufweist, das mit der HF-Quelle (16) oder dem Sender verbunden ist;
Bereitstellen eines elektronischen Schalters (12); und
Bereitstellen einer Vielzahl von elektromechanischen Resonatoren (14₁, ... 14ₙ), die jeweils mit dem elektronischen Schalter (12) verbunden sind, wobei der elektronische Schalter (12) und die Vielzahl von elektromechanischen Resonatoren (14₁, ... 14ₙ) elektrisch verbunden sind:
(i) zwischen mindestens dem ersten (10DE) und dem zweiten (10RE) Abschnitt des mindestens einen Sendeelements; oder
(ii) zwischen der HF-Quelle (16) oder dem Sender und der Antenne (10);
wobei jeder elektromechanische Resonator (14₁, ... 14ₙ) so angeordnet ist, dass er mit der Antenne der HF-Quelle (16) oder dem Sender in einer anderen Tonfrequenz übereinstimmt [0008]; und
Bereitstellen einer digitalen Steuereinheit (20), die so konfiguriert ist, dass sie die HF-Quelle (16) oder den Sender steuert, um eine Frequenzumtastung oder eine Spreizspektrum-Modulation [0008] eines Eingangsdatenstroms (26) zu implementieren [0033];
wobei die digitale Steuereinheit (20) ferner so konfiguriert ist, dass sie den elektronischen Schalter (12) steuert, um einen bestimmten oder bestimmte der Vielzahl von elektromechanischen Resonatoren (14₁, ... 14ₙ) auszuwählen, die mit den Tonsignalen, die von der HF-Quelle (16) oder dem Sender erzeugt werden, übereinstimmen [0008].

7. Verfahren nach Anspruch 6, umfassend:
nacheinander Erzeugen von Tonsignalen durch die HF-Quelle (16) oder den Sender, die in der Lage sind, eine Vielzahl verschiedener Tonsignale zu erzeugen;
über den elektrischen Schalter (12) Verbinden eines Ausgangs der HF-Quelle (16) oder des Senders mit der Antenne (10) über einen ausgewählten oder die ausgewählten der Vielzahl von elektromechanischen Resonatoren (14₁, ... 14ₙ), wobei der ausgewählte oder die ausgewählten der Vielzahl von elektromechanischen Resonatoren (14₁, ... 14ₙ) gemäß einem Triggersignal (22) ausgewählt werden, das auch ein entsprechendes Tonsignal auswählt, das von der HF-Quelle (16) oder dem Sender erzeugt wurde;
wobei der Schritt des nacheinander Erzeugens durch eine HF-Quelle (16) oder einen Sender das nacheinander Erzeugen einzelner Signaltöne umfasst und wobei die Vielzahl von elektromechanischen Resonatoren (14₁, ... 14ₙ) eine Vielzahl von MEMS-Resonatoren ist; wobei das Triggersignal (22) durch die digitale Steuereinheit (20) erzeugt wird.

8. Verfahren nach Anspruch *7,*
wobei jeder der Vielzahl von Resonatoren (14₁, ... 14ₙ) serielle und parallele Resonanzfrequenzen aufweist und ein zugeordneter Q-Faktor größer ist als 500, wenn ein Signal mit einer Frequenz zwischen den seriellen und parallelen Resonanzfrequenzen übertragen wird.

9. Verfahren nach Anspruch 8, wobei die Antenne (10) mindestens einen ersten (10DE) und zweiten (10RE) Abschnitt aufweist, die über den ausgewählten oder die ausgewählten aus einer Vielzahl von Resonatoren (14₁, ... 14ₙ) miteinander verbunden sind.

10. Verfahren nach Anspruch 7, wobei das Triggersignal (22) durch die digitale Steuereinheit (20) erzeugt wird, um den ausgewählten aus einer Vielzahl von MEMS-Resonatoren (14₁, ... 14ₙ) zu ändern, um den Ausgang der HF-Quelle (16) oder des Senders mit der Antenne (10) während eines Zeitraums zu verbinden, wenn das HF-Signal, das von der HF-Quelle oder dem Sender erzeugt wird, ein Minimum zeigt.

11. Verfahren nach Anspruch 8, wobei der eine oder die ausgewählten aus einer Vielzahl von MEMS-Resonatoren (14₁, ... 14ₙ) die Antenne (10) mit der HF-Quelle (16) oder dem Sender mit einem relativ hohen Q-Faktor während eines gegebenen Zeitraums verbindet als wenn ein nicht ausgewählter oder nicht ausgewählte der elektromechanischen Resonatoren (14₁, ... 14ₙ) stattdessen zwischen der HF-Quelle (16) oder dem Sender mit der Antenne während des gegebenen Zeitraums verbunden wäre.

12. Verfahren nach Anspruch 8, wobei die Antenne (10) eine elektrisch kleine Antenne ist.

## Revendications

1. Dispositif émetteur RF comprenant :
une source RF (16) ou un émetteur agencé pour générer des signaux à tons un à la fois ;
et
une antenne (10), l'antenne (10) présentant au moins un élément émetteur couplé à la source RF (16) ou à l'émetteur ;
un commutateur électronique (12) ; et
une pluralité de résonateurs électromécaniques (14₁, ... 14ₙ) connectés chacun audit commutateur électronique (12), le commutateur électronique (12) et la pluralité de résonateurs électromécaniques (14₁, ... 14ₙ) étant connectés électriquement :
(i) entre au moins une première (10DE) et seconde (10RE) parties dudit au moins un élément émetteur ; ou
(ii) entre la source RF (16) ou l'émetteur et l'antenne (10) ;
chaque résonateur électromécanique (14₁, ... 14ₙ) est agencé pour adapter l'antenne à la source RF (16) ou à l'émetteur à une fréquence tonale différente ; et
une unité de commande numérique (20) conçue pour commander la source RF (16) ou l'émetteur afin de mettre en œuvre une modulation par déplacement de fréquence ou une modulation par étalement de spectre d'un flux de données d'entrée (26) ;
l'unité de commande numérique (20) est conçue en outre pour commander le commutateur électronique (12) destiné à sélectionner un résonateur électromécanique particulier ou des résonateurs électromécaniques particuliers de ladite pluralité de résonateurs électromécaniques (14₁, ... 14ₙ) de manière cohérente avec les signaux à tons générés par la source RF (16) ou l'émetteur.

2. Dispositif émetteur RF selon la revendication 1, dans lequel le commutateur électronique (12) est un commutateur unipolaire à plusieurs directions (SPMT) transistorisé.

3. Dispositif émetteur RF selon la revendication 1, dans lequel l'antenne (10) est une antenne dipolaire électriquement courte ou une antenne unipolaire électriquement courte.

4. Dispositif émetteur RF selon la revendication 1, dans lequel
la source RF (16) ou l'émetteur est conçu pour émettre un ton sélectionné parmi n tons (signaux monofréquences) différents pendant une période donnée telle que commandée par un signal de déclenchement (22) généré par ladite unité de commande numérique (20) et dans lequel ladite unité de commande numérique (20) est également conçue pour amener le commutateur électronique (12) à changer d'état pour permettre ainsi au résonateur sélectionné par commutateur ou à ceux sélectionnés par commutateur parmi ladite pluralité de résonateurs électromécaniques (14₁, ... 14ₙ) de coupler un ton sélectionné par commutateur parmi n tons différents à ladite antenne (10) avec un Q relativement plus élevé pendant ladite période donnée que si un résonateur non sélectionné des dits résonateurs électromécaniques (14₁, ... 14ₙ) était connecté plutôt entre ladite source RF (16) ou émetteur et l'antenne (10) pendant ladite période donnée.

5. Dispositif émetteur RF selon la revendication 1, dans lequel
la source RF (16) ou l'émetteur est conçu pour émettre un ton sélectionné parmi n tons différents pendant une période donnée telle que commandée par un signal de déclenchement (22) généré par ladite unité de commande numérique (20) et dans lequel ladite unité de commande numérique (20) est conçue également pour amener le commutateur électronique (12) à changer d'état pour permettre ainsi au résonateur sélectionné par commutateur ou à ceux sélectionnés par commutateur de ladite pluralité de résonateurs électromécaniques (14₁, ... 14ₙ) d'adapter l'antenne (10) au dispositif émetteur RF à la fréquence du résonateur sélectionné par commutateur parmi n tons différents pendant ladite période donnée.

6. Procédé d'émission d'un signal RF provenant d'une antenne (10), le procédé comprenant :
la fourniture d'une source RF (16) ou un d'émetteur agencé pour générer des signaux à tons un à la fois [0008] ; et
la fourniture d'une antenne (10), l'antenne (10) présentant au moins un élément émetteur couplé à la source RF (16) ou à l'émetteur ;
la fourniture d'un commutateur électronique (12) ; et
la fourniture d'une pluralité de résonateurs électromécaniques (14₁, ... 14ₙ) connectés chacun audit commutateur électronique (12), le commutateur électronique (12) et la pluralité de résonateurs électromécaniques (14₁, ... 14ₙ) étant connectés électriquement :
(i) entre au moins une première (10DE) et seconde (10RE) parties dudit au moins un élément émetteur ; ou
(ii) entre la source RF (16) ou l'émetteur et l'antenne (10) ;
chaque résonateur électromécanique (14₁, ... 14ₙ) est agencé pour adapter l'antenne à la source RF (16) ou à l'émetteur à une fréquence tonale différente [0008] ; et
la fourniture d'une unité de commande numérique (20) conçue pour commander la source RF (16) ou l'émetteur afin de mettre en œuvre une modulation par déplacement de fréquence ou une modulation par étalement de spectre [0008] d'un flux de données d'entrée (26) [0033] ;
l'unité de commande numérique (20) est conçue en outre pour commander le commutateur électronique (12) destiné à sélectionner un résonateur électromécanique particulier ou des résonateurs électromécaniques particuliers de ladite pluralité de résonateurs électromécaniques (14₁, ... 14ₙ) de manière cohérente avec les signaux à tons générés par la source RF (16) ou l'émetteur [0008].

7. Procédé selon la revendication 6, comprenant :
la génération de signaux un à la fois par la source RF (16) ou l'émetteur susceptible de générer une pluralité de signaux différents ;
le commutateur électronique (12) couplant une sortie de la source RF (16) ou de l'émetteur à l'antenne (10) par l'intermédiaire d'un ou de plusieurs des résonateurs sélectionnés parmi la pluralité de résonateurs électromécaniques (14₁, ... 14ₙ), le ou plusieurs des résonateurs sélectionnés parmi la pluralité de résonateurs électromécaniques (14₁, ... 14ₙ) étant sélectionnés en fonction d'un signal de déclenchement (22) qui sélectionne également un signal correspondant généré par la source RF (16) ou l'émetteur ;
dans lequel l'étape de génération d'un à la fois par une source RF (16) ou un émetteur comprend la génération de tons uniques un à la fois et dans lequel la pluralité de résonateurs électromécaniques (14₁, ... 14ₙ) est une pluralité de résonateurs micro électromécaniques (MEMS) ; dans lequel le signal de déclenchement (22) est généré par l'unité de commande numérique (20).

8. Procédé selon la revendication 7,
dans lequel chaque résonateur parmi la pluralité de résonateurs (14₁, ... 14ₙ) présente des fréquences de résonance série et parallèle et présente un Q associé supérieur à 500 lors du passage d'un signal présentant une fréquence comprise entre lesdites fréquences de résonance série et parallèle.

9. Procédé selon la revendication 8, dans lequel l'antenne (10) présente au moins des première (10DE) et seconde (10RE) parties qui sont connectées l'une à l'autre par l'intermédiaire dudit un ou plusieurs des résonateurs sélectionnés parmi une pluralité de résonateurs (14₁, ... 14ₙ).

10. Procédé selon la revendication 7, dans lequel le signal de déclenchement (22) est généré par l'unité de commande numérique (20) destinée à modifier le résonateur sélectionné parmi une pluralité de résonateurs MEMS (14₁, ... 14ₙ) couplant la sortie de la source RF (16) ou de l'émetteur à l'antenne (10) pendant un temps dans lequel le signal RF généré par la source ou l'émetteur RF est minimal.

11. Procédé selon la revendication 8, dans lequel l'un ou plusieurs des résonateurs sélectionnés parmi une pluralité de résonateurs MEMS (14₁, ... 14ₙ) couple l'antenne (10) à la source RF (16) ou à l'émetteur avec un Q relativement plus élevé pendant une période de temps donnée que si un ou plusieurs desdits résonateurs électromécaniques non sélectionnés (14₁, ... 14ₙ) étaient connectés à la place entre ladite source RF (16) ou l'émetteur à ladite antenne pendant ladite période donnée.

12. Procédé selon la revendication 8 dans lequel l'antenne (10) est une antenne électriquement petite.
